# EUROPÄISCHE PATENTSCHRIFT

(11) **EP 0 654 776 B1**
(45) Veröffentlichungstag und Bekanntmachung des Hinweises auf die Patenterteilung: **03.03.1999**
(21) Anmeldenummer: 94117923.6
(22) Anmeldetag: 14.11.1994
(51) Int. Cl.: G09B 9/30, G09B 19/16, G09B 9/24

(54) **Piloten-Trainingsgerät**
Pilot training device
Dispositif d'entraînement pour pilotes

(30) Priorität: 20.11.1993 DE 4339606
(43) Veröffentlichungstag der Anmeldung: 24.05.1995
(73) Patentinhaber: Bodenseewerk Gerätetechnik GmbH, 88662 Überlingen (DE)
(72) Erfinder: Krogmann, Uwe, D-88662 Überlingen (DE); Emmerich, Peter, D-88097 Eriskirch (DE)
(74) Vertreter: Wolgast, Rudolf, Dipl.-Chem. Dr.

(56) Entgegenhaltungen:
- EP-A- 0 399 418
- EP-A- 0 416 318
- EP-A- 0 433 145
- EP-A- 0 511 154
- EP-A- 0 537 945
- WO-A-90/07172
- US-A- 5 113 177
- KRISHNAKUMAR K ET AL. "SIMULATOR BASED ADAPTIVE HELICOPTER TRAINING USING NEURAL NETWORKS" 13.Oktober 1991 , DECISION AIDING FOR COMPLEX SYSTEMS, CHARLOTTESVILLE, VA., OCT. 13 - 16, 1991, VOL. 3, PAGE(S) 1511 - 1516 , INSTITUTE OF ELECTRICAL AND ELECTRONICS ENGINEERS XP000237869 * das ganze Dokument *
- AIAA/IEEE DIGITAL AVIONICS SYSTEMS CONFERENCE, NEW YORK,OCT. 25-28 1993,AIAA/IEEE, Seiten 286-291, XP002014707 MÖLLER ET AL: "SYNTHETIC VISION FOR IMPROVINGFLIGHT CONTROL IN NIGHT,POOR VISIBILITY AND ADVERSE WEATHER CONDITIONS"
- PROCEEDINGS OF THE DIGITAL AVIONICS SYSTEMS CONFERENCE, LOS ANGELES, OCT. 14 - 17, 1991, Nr. CONF. 10, 14.Oktober 1991, INSTITUTE OF ELECTRICAL AND ELECTRONICS ENGINEERS, Seiten 115-124, XP000309233 SWENSON H N ET AL: "SIMULATION EVALUATION OF A LOW-ALTITUDE HELICOPTER FLIGHT GUIDANCE SYSTEM ADAPTED FOR A HELMET-MOUNTED DISPLAY"

## Beschreibung

Die Erfindung betrifft ein Piloten-Trainingsgerät enthaltend einen an einem Helm des Piloten angebrachten Videobild-Generator mit einem Bildschirm, dessen Bild über einen teildurchlässigen Spiegel in das Auge des Piloten einspiegelbar ist, einen an dem Flugzeug anbringbaren Außenlastbehälter mit Mitteln zur Erzeugung von Szenarien einschließlich eines durch den Videobild-Generator erzeugten, in das Auge des Piloten einspiegelbaren Bildes und Sensoren zur Bestimmung von zugehörigen Flugdaten des Flugzeugs.

Ein solches Piloten-Trainingsgerät ist bekannt durch die EP-A-0 399 418. Ein solches Piloten-Trainingsgerät gestattet es, im Gegensatz zu stationären Simulatoren, Einsätze realistisch im Flugzeug selbst zu trainieren. Dabei können aber z.B. Tiefflüge trainiert werden, ohne daß das Flugzeug dazu tatsächlich im Tiefflug über dichtbesiedelte Gebiete zu fliegen braucht. Die Übung kann in großer Höhe oder über wenig besiedeltem Gebiet stattfinden. Für die Simulation wird die Höhenanzeige verändert. Das durch den Videobild-Generator erzeugte Bild wird nach Maßgabe der Bewegungen des Flugzeugs im Raum, die durch Inertialsensoren festgestellt werden, verändert. Das bekannte Piloten-Trainingsgerät gestattet auch im Flug die Simulation von Bedrohungen, welche Gegenmaßnahmen auslösen sollten. Das bekannte Piloten-Trainingsgerät gestattet jedoch keine Kontrolle der Reaktionen des Piloten auf die im Flugzeug simulierten Szenarien. Eine solche Kontrolle ist auch nicht einfach zu erhalten.

Ein Aufsatz von KrishnaKumar & Sawhney "Simulator Based Adaptive Helicopter Training Using Neural Networks" in "Conference Proceedings, 1991 IEEE International Conference on Systems, Man, and Cybernetics" beschreibt einen stationären Simulator zum Trainieren von Hubschrauberflügen. Ein neuronales Netz soll dabei den Fluglehrer ersetzen, der zunächst -bei geringem fliegerischen Können des Flugschülers- sehr stark in den Regelkreis des Simulators eingreift, so daß sich der simulierte Hubschrauber zunächst für den Flugschüler relativ einfach fliegen läßt, wobei diese Hilfe des "Fluglehrers" mit zunehmenden Fähigkeiten des Flugschülers reduziert wird.

Der Erfindung liegt die Aufgabe zugrunde, bei einem Piloten-Trainingsgerät der eingangs genannten Art eine Kontrolle des Trainingsstandes des Piloten zu ermöglichen.

Erfindungsgemäß wird diese Aufgabe dadurch gelöst, daß als Mittel zur Aufzeichnung und Bewertung von Pilotenreaktionen auf die Szenarien und Flugdaten ein neuronales Netz mit Gewichten vorgesehen ist, das in einem Anfangszustand zur Nachbildung des Verhaltens eines generischen Piloten als Reaktion auf die Szenarien und durch Sensorsignale repräsentierten Flugdaten trainiert ist und in einem Lernmodus während des Fluges mit den eingespiegelten Bildern von den Sensorsignalen und Signalen beaufschlagt ist, welche die Reaktionen eines realen, menschlichen Piloten wiedergeben, so daß das neuronale Netz sich in einem Lernprozess von dem Anfangszustand auf einen Zustand mit geänderten Gewichten "umtrainiert", in welchem es in seinem Verhalten dem Verhalten des realen menschlichen Piloten angenähert ist, eine adaptive Wissens-und Datenbasis mit Regeln, die das Verhalten eines Piloten in Abhängigkeit von den Sensorsignalen in Wenn-Dann-Form kodifizieren und die mit Gewichten versehen sind, welche die Bedeutung der Regeln für das richtige Pilotenverhalten wiedergeben, Mittel zum Aufschalten der Sensorsignale auf die Wissens- und Datenbasis sowie Mittel zur schrittweisen Veränderung der Gewichte der Wissens- und Datenbasis in Abhängigkeit von Veränderung der Gewichte des neuronalen Netzes relativ zu dem Anfangszustand.

In einem neuronalen Netz wird das Verhalten eines "guten", generischen Piloten gespeichert. Das neuronale Netz hat Eingänge auf welche Sensorsignale aufgeschaltet sind, welche die Flugzustände, die Höhe über dem ggf. virtuellen Grund usw. wiedergeben. Die Ausgänge des neuronalen Netzes liefern die Reaktionen des generischen Piloten auf diese Sensorsignale. Eingänge und Ausgänge sind durch Gewichte verknüpft, die im Flugbetrieb mit einem solchen generischen Piloten durch Lernen bestimmt wurden. Das ist der Ausgangszustand des neuronalen Netzes vor dem Trainingsflug. Bei dem Trainingsflug lernt das neuronale Netz jetzt um: Es paßt sich an das Verhalten des trainierenden Piloten an. Bei diesem Umlernvorgang werden die Gewichte des neuronalen Netzes gegenüber dem Ausgangszustand verändert. Das neuronale Netz verhält sich nach einiger Zeit so wie der trainierende Pilot.

Auch diese Veränderung der Gewichte des neuronalen Netzes ist einer Auswertung hinsichtlich des Trainingsstandes des Piloten praktisch nicht zugänglich.

Die Erfindung sieht daher noch einen weiteren Schritt vor: Eine Wissens- und Datenbasis enthält Regeln in der Wenn-Dann-Form, die das richtige Verhalten eines Piloten beschreiben. Das ist eine Art "Handbuch für Piloten". Diese Regeln sind mit Gewichten versehen. Die Gewichte der Regeln sind wiederum eine Funktion der Gewichte des neuronalen Netzes. Mit Veränderung der Gewichte des neuronalen Netzes werden auch die Gewichte der einzelnen Regeln verändert. Wenn etwa der Pilot eine in der Wissens-und Datenbasis gespeicherte Regel wiederholt außer Acht läßt, dann wird sich das Gewicht dieser Regel vermindern.

Die Gewichte der Regeln in der Wissens- und Datenbasis gestatten nun eine Auswertung. Es kann festgestellt werden, welche Fehler (Verletzung von Regeln) der Pilot wiederholt gemacht hat. Daraus läßt sich wiederum eine Bewertung des Trainingsstandes ableiten.

Ausgestaltungen der Erfindung sind Gegenstand der abhängigen Patentansprüche.

Ein Ausführungsbeispiel der Erfindung ist nachstehend unter Bezugnahme auf die zugehörigen Zeichnungen näher erläutert.
- Fig.1: zeigt den Kopf eines Piloten mit einem Helm, an welchem die Einrichtungen für das Piloten-Training angebracht sind.
- Fig.2: zeigt schematisch-perspektivisch einen Außenlastbehälter mit einem Piloten-Trainingsgerät.
- Fig.3: zeigt eine zugehörige Bodenstation zur Auswertung der Übung.
- Fig.4: zeigt eine adaptive Auswerte-Einrichtung zur Erzeugung quantitativer Qualitätskriterien für den Ausbildungsstand.

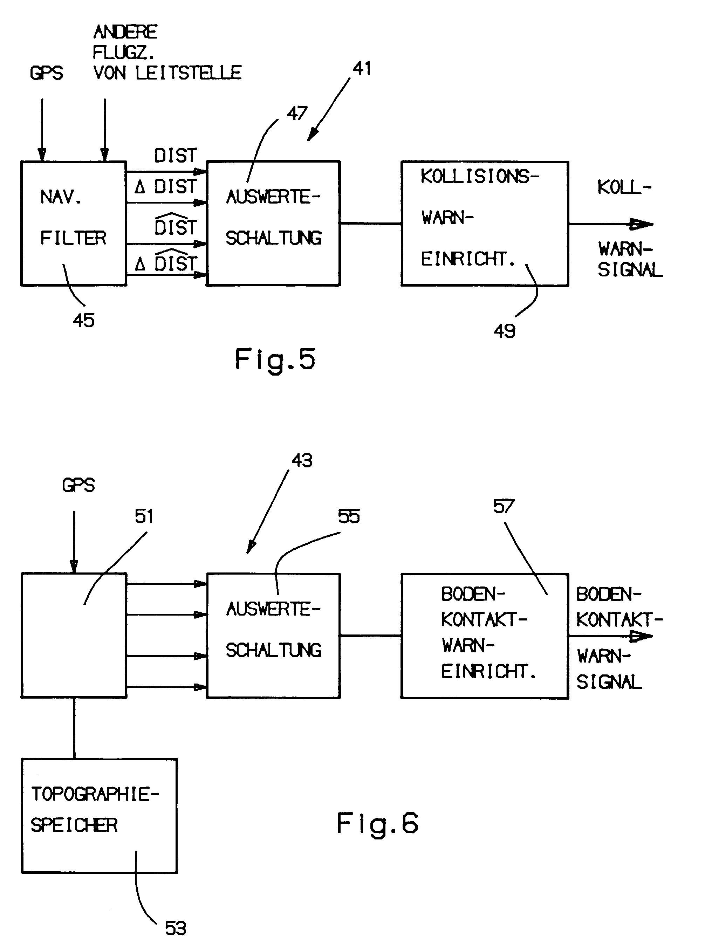

- Fig.5: ist ein Blockdiagramm und zeigt in dem Außenbehälter angeordnete Kollisions-Warnmittel.
- Fig.6: ist ein Blockdiagramm und zeigt eine Warneinrichtung zum Signalisieren der Gefahr einer Bodenberührung.

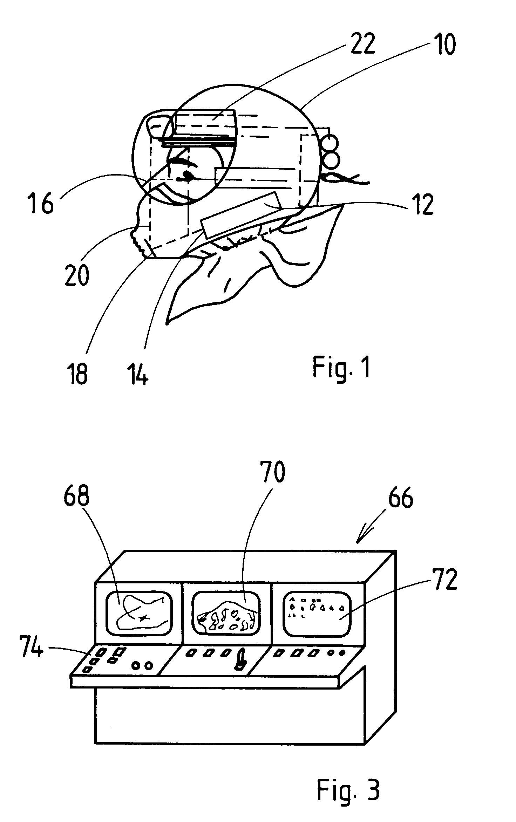

In Fig.1 ist mit 10 der Helm eines Piloten bezeichnet. An dem Helm 10 sitzt seitlich unten ein Videobild-Generator 12 mit einem Bildschirm 14. An dem Helm ist vor dem Auge des Piloten ein zur Blickrichtung geneigter, teildurchlässiger Spiegel 16 angebracht. Das auf dem Bildschirm 14 erscheinende Bild wird über einen Umlenkspiegel 18 und den teildurchlässigen Spiegel 16 in das Auge des Piloten eingespiegelt. Der Strahlengang ist durch die gestrichelte Linie 20 dargestellt. Der teildurchlässige Spiegel ist als Konvexspiegel ausgebildet, so daß das Bild des Videobild-Generators für den Piloten im Unendlichen erscheint.

Am Helm 10 des Piloten ist ferner eine Videokamera 22 angebracht. In diese Videokamera wird über die Außenseite des teildurchlässigen Spiegels 16 das reale Gesichtsfeld eingespiegelt, das der Pilot in jedem Augenblick sieht. Dadurch kann die Kopfhaltung des Piloten bestimmt und bei der Erzeugung der Bilder auf dem Bildschirm des Videobild-Generators berücksichtigt werden.

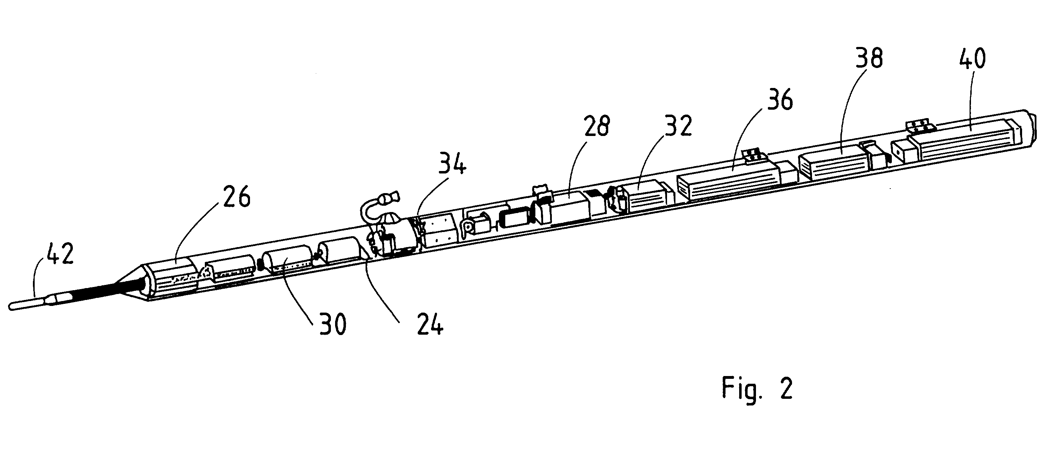

In Fig.2 ist schematisch-perspektivisch der Grundaufbau eines Außenlastbehälters 24 dargestellt. Der Außenlastbehälter 24 hat eine ähnlich langgestreckte Form wie ein Lenkflugkörper. Der Außenlastbehälter 24 wird auch ähnlich wie ein Lenkflugkörper unter den Tragflächen des Flugzeugs angebracht.

Der Außenlastbehälter 24 enthält Mitteln zur Bestimmung von Flugdaten. Diese Mittel sind von einer Antenne 26 für die Satelliten-Navigation (GPS = Global Positioning System) mit einem zugehörigen Empfänger 28, Luftströmungs-Sensoren 30 sowie einem Trägheits-Referenzsystem 32 gebildet. Mit 34 ist die Stromversorgung des Außenlastbehälters 24 bezeichnet. Der Außenlastbehälter 24 enthält einen Prozessor 36, eine Schnittstellen-Einheit 38 und einen Datenspeicher 40. An dem Außenlastbehälter 24 ist weiterhin ein Modell 42 eines Suchkopfes eines Lenkflugkörpers angebracht. Dieses Modell liefert Signale, wie sie auch ein echter Lenkflugkörper liefern würde.

Der Außenlastbehälter 24 enthält einen Reichweiten-Rechner (In-Range-Rechner) mit gespeicherten Flugzeug- und Flugkörper-Daten zur Simulation des Abschusses eines Flugkörpers. Anhand der Signale von dem Modell 42 des Lenkflugkörpers und von Daten über ein simuliertes Feindflugzeug berechnet der Reichweiten-Rechner, ob und wann ein Lenkflugkörper mit Aussicht auf Erfolg abgeschossen werden kann und liefert dem Piloten ein entsprechendes Signal. Der Pilot kann auf diese Weise das Abfeuern eines Lenkflugkörpers trainieren, ohne daß dazu ein solcher Lenkflugkörper tatsächlich abgefeuert werden müßte.

Der Außenlastbehälter 24 enthält in dem Datenspeicher 40 einen Geländedatenspeicher, in dem Prozessor 36 Mittel zur Erzeugung einer dreidimensionalen Szene unter Benutzung der gespeicherten Geländedaten und Mittel zur Darstellung des jeweils beobachteten Geländes mittels des Videobild-Generators 12.

Weiterhin ist in dem Außenlastbehälter 24 ein Szenen- oder Symbolgenerator zur dreidimensionalen Darstellung von Feindflugzeugen vorgesehen, deren Bilder über den Videobild-Generator 12 und den teildurchlässigen Spiegel 16 in das Auge des Piloten eingespiegelt werden. Die Trajektorien der Bewegungen dieser Feindflugzeuge (oder sonstiger Objekte) werden von einem Trajektorien-Rechner berechnet. Diese Trajektorien können von dem Flugverhalten des eigenen Flugzeugs, wie es z.B. durch die flugdatenbestimmenden Mittel 26, 28, 30 und 32 des Außenlastbehälters 24 angezeigt wird, abhängen. Die von dem Trajektorien-Rechner berechneten Trajektorien der Feindflugzeuge können auch von sonstigen Maßnahmen des Piloten, z.B. dem Abfeuern eines (simulierten) Lenkflugkörpers beeinflußbar sein. Die längs der berechneten Trajektorien bewegenden, simulierten Feindflugzeuge (oder sonstigen Objekte, z.B. Störziele (Flares)) werden durch den Videobild-Generator dargestellt und ebenfalls über den teildurchlässigen Spiegel 16 in das Auge des Piloten eingespiegelt.

Der Außenlastbehälter 24 enthält weiterhin Modelle zur Simulation von elektronischen Gegenmaßnahmen (EK-, IRECM). Außerdem enthält der Außenlastbehälter 24 ein Modell eines Bedrohungszustand-Sensorsystems zur Simulation von Bedrohungszuständen. Kampfflugzeuge sind üblicherweise mit Sensoren bestückt, welche "Bedrohungszustände" signalisieren. Solche Sensoren können beispielsweise auf Radar- oder Laserstrahlen ensprechen, welche das Flugzeug erfassen. Ansere Sensoren können z.B. anfliegende Raketen erfassen. Ein solches Sensorsystem liefert Warnsignale. Das "Modell" in dem Außenlastbehälter simuliert solche Warnsignale.

Der Außenlastbehälter 24 enthält Kollisions-Warnmittel 41. Weiterhin enthält der Außenlastbehälter 24 eine Warneinrichtung 43 zum Signalisieren einer Gefahr der Bodenberührung. Die Kollisions-Warnmittel 41 erhalten z.B. von dem Satelliten-Empfänger (GPS-Empfänger) 28 und/oder einem Trägheitsnavigationssystem die genaue eigene Position und Geschwindigkeit. Diese Daten werden über Funk an eine Leitstelle übermittelt. Von der Leitstelle erhalten die Kollisions-Warnmittel 41 weiterhin die Positionen und Geschwindigkeiten aller anderen an dem Einsatz beteiligten Flugzeuge. Daraus bildet ein Navigationsfilter 45 die Abstände zu den verschiedenen anderen Flugzeugen und die Änderung der Abstände in einem bestimmten Rechentakt-Intervall. Weiterhin bestimmt das Navigationsfilter 45 prädizierte Abstände und prädizierte Abstandsänderungen für ein bestimmtes nachfolgendes Zeitintervall. Das sind "Flugbahn-Merkmale". Diese Flugbahn-Merkmale sind auf eine Auswertschaltung 47 geschaltet, welche bei einer nach bestimmten Kriterien aus den Flugbahn-Merkmalen abgeleiteten Kollisionsgefahr eine Kollisions-Warneinrichtung 49 ansteuert. Auf ähnliche Weise arbeitet die Warneinrichtung 43 zum Signalisieren einer Gefahr bei Bodenberührung.

Statt über eine Leitstelle zu gehen, kann auch jedes an dem Einsatz beteiligte Flugzeug seine Position über Funk den Kollisions-Warnmitteln aller anderen am Einsatz beteiligten Flugzeuge übermitteln. Die Kollisions-Warnmittel jedes Flugzeuges erhalten dann Positionsdaten direkt von den anderen Flugzeugen.

Ein Navigationsfilter 51 erhält einmal die genaue Position und Geschwindigkeit des eigenen Flugzeugs von dem GPS-Empfänger und zum anderen Geländedaten aus einem Topographie-Speicher 53. Entfernungs- und Entfernungsänderungs-Signale sind auf eine Auswerteschaltung 55 geschaltet. Die Auswerteschaltung 55 steuert bei Gefahr eines Bodenkontaktes eine Bodenkontakt-Warneinrichtung 57 an.

Der Außenlastbehälter 24 enthält Mittel zur Simulation von eigenem und/oder feindlichem Waffeneinsatz.

Schließlich ist eine adaptive Wissens- und Datenbasis vorgesehen, welche aus Sensorsignalen ein Maß für die Fähigkeiten des Piloten ableitet. Dabei ist ein neuronales Netz vorgesehen, welches Sensorsignale und Pilotenreaktionen vergleicht und durch welches die Gewichtung von Regeln der adaptiven Wissens- und Datenbasis veränderbar ist.

Das ist in Fig.4 dargestellt.

Eingangs- oder Referenzsignale sind durch einen Pfeil 44 dargestellt. Diese Signale "empfängt" der Pilot, der durch ein Rechteck 46 symbolisiert ist. Der Pilot 46 steuert das Flugzeug 48. Das Flugzeug 48 reagiert darauf, wie durch die Schleife 50 dargestellt ist. Der Pilot erfaßt auch diese Reaktion in bezug auf die Eingangs- oder Referenzsignale. Das ist durch einen Summierpunkt 52 und Pfeil 54 angedeutet.

Sensoren erfassen die Reaktion des Flugzeugs 48 in bezug auf die Eingangs- oder Referenzsignale. Ein neuronales Netzwerk 56, das durch Trainieren die Fähigkeiten eines guten Piloten erworben hat und einen "generischen Piloten" repräsentiert, setzt diese relative Reaktion des Flugzeugs (Pfeil 54) in Beziehung zu der Reaktion des Piloten im Punkt 58 des den Piloten als "Regler" enthaltenden "Regelkreises". Ausgehend von dem ursprünglichen Trainingszustand des neuronalen Netzwerkes 56 wird dieses Netzwerk 56 durch die Sensorsignale und die daraus resultierenden Reaktionen des menschlichen Piloten "umtrainiert", so dass es sich dem Verhalten des realen menschlichen Piloten annähert.

Eine Wissens- und Datenbasis 60 enthält Regeln für das Verhalten des Piloten, gewissermassen ein "Lehrbuch für Piloten". Die Regeln haben die Form "Wenn..., dann...": "Wenn diese und jene Sensorsignale auftreten, dann muss der Pilot dies und das tun." Diese Regeln haben Gewichte. Diese Gewichte richten sich danach, wie strikt der Pilot die zugehörige Regel anwenden muss und in der Praxis anwendet.

Mit der Veränderung des neuronalen Netzwerkes 56 ausgehend vom ursprünglichen Trainingszustand des Netzwerkes und der damit erfolgenden Anpassung an das Verhalten des realen Piloten werden gleichzeitig die Gewichte der Regeln verändert. Das ist in Fig. 4 durch den Pfeil 62 dargestellt. Wenn etwa ein Pilot eine bestimmte Regel wiederholt nicht beachtet, so wird das "Gewicht" dieser Regel in dem Regelwerk der Wissens- und Datenbasis gegenüber dem Ausgangszustand vermindert. Die Gewichte der verschiedenen Regeln liefern somit ein Maß für die Fähigkeiten des Piloten. Die Bildung dieses Maßes ist in Fig. 4 durch einen Block 64 dargestellt.

Die Verwendung eines neuronalen Netzes 56, das als Anfangszustand mit dem Verhalten eines guten Piloten trainiert ist, hat den Vorteil, dass durch den Lernvorgang mit dem realen Piloten 46 sehr schnell ein Endzustand erreicht werden kann, in welchem sich die Gewichte bei weiterem Training nicht mehr wesentlich ändern. Bei einem Anfangszustand mit statistisch verteilten Gewichten des neuronalen Netzes 56 würde es viel zu lange dauern, das Netz zu trainieren. Man kann davon ausgehen, dass das Verhalten des zu testenden Piloten sich nicht grundsätzlich von dem eines "guten" oder generischen Piloten unterscheidet. Es ist leichter ein dem generischen Piloten entsprechendes neuronales Netz an einen anderen Piloten 46 anzupassen als ein untrainiertes Netz, das sozusagen einen Laien repräsentieren würde.

Das neuronale Netz 56 allein würde kein quantitatives Maß für das Können des Piloten 46 liefern. Es würde auch keinen Schluss gestatten, welche Fehler der Pilot 46 macht, d.h. in welcher Hinsicht das Verhalten des Piloten 46 von dem des "generischen Piloten" abweicht. Daher werden gemäss Pfeil 62 die Gewichte des neuronalen Netzes in Gewichte von definierten Regeln umgesetzt.

Durch die Veränderungen der Gewichte des neuronalen Netzes relativ zu dem Anfangszustand können Regeln der Wissens- und Datenbasis 60 veränderbar sein. Es können auch neue Regeln kreiert werden. Es ist bekannt, welche Grössen durch die Gewichte des neuronalen Netzes miteinander verknüpft werden. Ein Programm sucht nach Zusammenhängen von der Form, dass bestimmte Eingänge (Sensorsignale) mit besonders grossen Gewichten mit einem bestimmten Ausgang (Pilotenreaktion) aufgeschaltet sind. Solche grossen Gewichte bedeuten ja, dass bei Auftreten der den Eingängen zugeordneten Sensorsignale der Pilot besonders häufig im Sinne des Ausgangs (oder mehrerer Ausgänge) reagiert hat. Solche Zusammenhänge können als "Wenn...-dann"-Regel formuliert werden. Das Programm prüft, ob diese neue Regel in der Wissens- und Datenbasis 60 schon enthalten ist. Ist das nicht der Fall, wird die neue Regel in die Wissens- und Datenbasis eingespeichert.

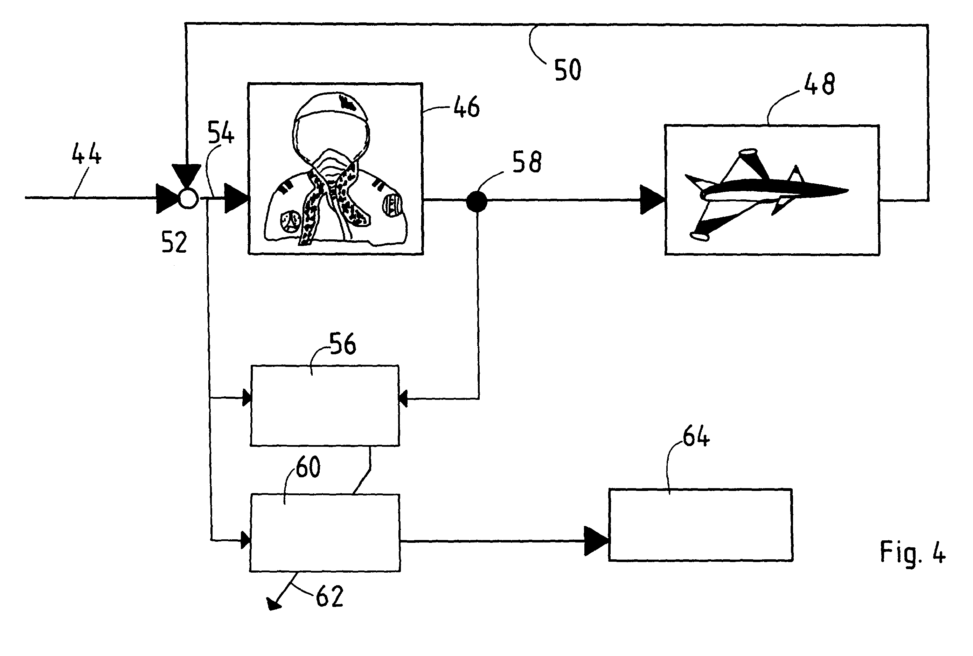

Fig.3 zeigt eine Bodenstation 66. Die Bodenstation 66 dient der Auswertung der aufgezeichneten Daten, die mit dem Piloten erörtert werden. Die Bodenstation weist drei Bildschirme 68, 70 und 72 auf. Der Bildschirm 68 stellt die von dem eigenen Flugzeug und von einem simulierten feindlichen Kampfflugzeug durchflogenen Trajektorien dar, die von dem Piloten-Trainingsgerät gespeichert wurden. Bildschirm 70 zeigt das Bild, das sich für den Piloten aus dem Cockpit darbietet. Das ist das Bild, das von der Videokamera 22 aufgenommen wurde. Der Bildschirm 72 dient schließlich der Ausgabe alphanumerischer Daten. Eine Bedienkonsole 74 dient der Steuerung der Bodenstation und der Eingabe von Daten.

## Patentansprüche

1. Piloten-Trainingsgerät enthaltend
(a) einen an einem Helm (10) des Piloten angebrachten Videobild-Generator (12) mit einem Bildschirm (14), dessen Bild über einen teildurchlässigen Spiegel (16) in das Auge des Piloten einspiegelbar ist,
(b) einen an dem Flugzeug anbringbaren Außenlastbehälter (24) mit
(b1) Mitteln zur Erzeugung von Szenarien einschließlich eines durch den Videobild-Generator erzeugten, in das Auge des Piloten einspiegelbaren Bildes und
(b2) Sensoren zur Bestimmung von zugehörigen Flugdaten des Flugzeugs,
**dadurch gekennzeichnet, daß**
(c) als Mittel zur Aufzeichnung und Bewertung von Pilotenreaktionen auf die Szenarien und Flugdaten (44)
(c1) ein neuronales Netz (54) mit Gewichten vorgesehen ist, das in einem Anfangszustand zur Nachbildung des Verhaltens eines generischen Piloten als Reaktion auf die Szenarien und durch Sensorsignale repräsentierten Flugdaten trainiert ist und in einem Lernmodus während des Fluges mit den eingespiegelten Bildern von den Sensorsignalen und Signalen beaufschlagt ist, welche die Reaktionen eines realen, menschlichen Piloten wiedergeben, so daß das neuronale Netz sich in einem Lernprozess von dem Anfangszustand auf einen Zustand mit geänderten Gewichten "umtrainiert", in welchem es in seinem Verhalten dem Verhalten des realen menschlichen Piloten angenähert ist,
(c2) eine adaptive Wissens- und Datenbasis (60) mit Regeln, die das Verhalten eines Piloten in Abhängigkeit von den Sensorsignalen in Wenn-Dann-Form kodifizieren und die mit Gewichten versehen sind, welche die Bedeutung der Regeln für das richtige Pilotenverhalten wiedergeben,
(c3) Mittel zum Aufschalten der Sensorsignale auf die Wissens- und Datenbasis sowie
(c4) Mittel zur schrittweisen Veränderung der Gewichte der Wissens- und Datenbasis in Abhängigkeit von Veränderung der Gewichte des neuronalen Netzes (56) relativ zu dem Anfangszustand.

2. Piloten-Träiningsgerät nach Anspruch 1, gekennzeichnet durch Mittel zur Veränderung der Regeln der Wissens- und Datenbasis (60) in Abhängigkeit von Veränderungen der Gewichte des neuronalen Netzes (56) relativ zu dem Anfangszustand.

3. Piloten-Trainingsgerät nach Anspruch 1 oder 2, gekennzeichnet durch Mittel (64) zur Bildung eines Maßes für die fliegerischen Fähigkeiten des Piloten aus den geänderten Gewichten der Regeln in der Wissens- und Datenbasis (60).

## Claims

1. Pilot training device, comprising
(a) a video image generator (12) attached to the helmet (10) of the pilot and having a screen (14), the image of which is adapted to be reflected into the eye of the pilot through a semireflecting mirror (16),
(b) a pod (24) adapted to be attached to the aircraft and having
(b₁) means for generating scenarios including an image generated by the video image generator and adapted to be reflected into the eye of the pilot, and
(b₂) sensors for determining associated flight data of the aircraft,
**characterized in that**
(c) as means for recording and evaluation of pilot reactions to the scenarios and flight data (44) are provided
(c₁) a neural network (54) having weights, and which is trained in an initial state for imitation of the behaviour of a generic pilot as reaction to the scenarios and to flight data represented by sensor signals and to which the sensor signals and signals representing the reactions of a real human pilot are applied in a learning mode during the flight with reflected images, such that the neural network is "retrained" in a learning process from the initial state to a state having changed weights, in which its behaviour approaches the behaviour of the real human pilot,
(c₂) an adaptive knowledge and database (60) having rules, which code the behaviour of a pilot as a function of the sensor signals in if-when-form and which are provided with weights, which represents the importance of the rules for the correct pilot behaviour,
(c₃) means for applying the sensor signals to the knowledge and database, and
(c₄) means for stepwise changing the weights of the knowledge and database as a function of changes of the weights of the neural network (56) with respect to the initial state.

2. Pilot training device as set forth in claim 1, characterized by means for changing the rules of the knowledge and database (60) as a function of changes of the weights of the neural network (56) with respect to the initial state.

3. Pilot training device as set forth in claim 1 or 2, characterized by means (64) for generating a measure of the flying capability of the pilot from the changed weights of the rules in the knowledge and database (60).

## Revendications

1. Appareil d'entraînement pour pilotes comprenant
(a) un générateur d'images vidéo (12) placé au casque (10) du pilote et muni d'un écran (14) dont l'image est susceptible d'être projetée dans l'oeil du pilote par l'intermédiaire d'un miroir partiellement perméable (16),
(b) un réservoir de charge externe (24) susceptible d'être placé à l'avion muni
(b1) de moyens destinés à générer des scénarios, y compris une image susceptible d'être projetée dans l'oeil du pilote générée par le générateur d'images vidéo,
(b2) de capteurs destinés à déterminer des données de vol associées de l'avion,
**caractérisé par le fait que**
(c) en tant que moyens destinés à enregistrer et à évaluer des réactions du pilote aux scénarios ainsi que des données de vol (44),
(c1) il est prévu un réseau neuronal (54) muni de charges qui est entraîné à un niveau initial à reproduire le comportement d'un pilote générique en tant que réaction aux scénarios et à des données de vols représentées par des signaux de capteur et auquel sont appliquées en mode d'apprentissage pendant le vol les images projetées des signaux de capteur ainsi que des signaux rendant les réactions d'un vrai pilote humain de telle façon que le réseau neuronal se "réentraîne" pendant un processus d'apprentissage pour passer du niveau initial à un niveau de charges modifiées dans lequel il se rapproche, dans son comportement, du comportement du vrai pilote humain,
(c2) une base de données et de savoir adaptative (60) munie de règles codifiant le comportement d'un pilote sous forme de "si-alors" en fonction des signaux de capteur et pourvues de charges rendant la signification des règles du bon comportement du pilote,
(c3) des moyens destinés à appliquer les signaux de capteur à la base de données et de savoir ainsi que
(c4) des moyens destinés à modifier petit à petit les charges de la base de données et de savoir en fonction de la modification des charges du réseau neuronal (56) par rapport au niveau initial.

2. Appareil d'entraînement pour pilotes selon la revendication 1, **caractérisé par** des moyens destinés à modifier les règles de la base de données et de savoir (60) en fonction de modifications des charges du réseau neuronal (56) par rapport au niveau initial.

3. Appareil d'entraînement pour pilotes selon la revendication 1 ou 2, **caractérisé par** des moyens (64) destinés à former une mesure des aptitudes à voler du pilote à partir des charges modifiées des règles situées dans la base de données et de savoir (60).
